Europäisches Patentamt

**European Patent Office**

Office européen des brevets

(11) Publication number: **0 045 029**
**A2**

## EUROPEAN PATENT APPLICATION

(21) Application number: **81105692.8**

(51) Int. Cl.³: **F 02 D 5/02**

(22) Date of filing: **20.07.81**

(30) Priority: **30.07.80 JP 103626/80**

(43) Date of publication of application: **03.02.82**
**Bulletin 82/5**

(84) Designated Contracting States: **DE GB**

(71) Applicant: **Hitachi, Ltd., 5-1, Marunouchi 1-chome, Chiyoda-ku Tokyo 100 (JP)**

(72) Inventor: **Sano, Yukinori, 23-1, Ishikawa-cho Katsuta-shi, Ibaraki-ken (JP)**
Inventor: **Hoshi, Yoshikazu, 2650-62, Oaza-muramatsu Tokai-mura, Naka-gun Ibaraki-ken (JP)**
Inventor: **Takahashi, Ikuo, 1034, Higashiishikawa Katsuta-shi, Ibaraki-ken (JP)**

(74) Representative: **Patentanwälte Beetz sen. - Beetz jr. - Heldrich - Timpe - Siegfried - Schmitt-Fumian, Steinsdorfstrasse 10, D-8000 München 22 (DE)**

(54) **Fuel supply system for Diesel engines.**

(57) An electronic control system containing actuators (3, 5) for electrically controlling the injection variable and timing of the fuel injection pump (2) of a diesel engine. An arithmetic pattern or program for effecting the best characteristics while considering the Diesel engine and the fuel injection pump (2) as an integral structure is stored in the memory (101, 102) of a microcomputer and is arithmetically processed (100) on the basis of both the running condition of the engine and the condition variable of the fuel injection pump (2) so that the fuel injection variable and the injection timing are controlled.

EP 0 045 029 A2

FUEL SUPPLY SYSTEM FOR DIESEL ENGINES

FIELD OF THE INVENTION

The present invention relates to a fuel supply system for controlling the injection rate and timing of the fuel injection pump for Diesel engines and, more particularly, to a fuel supply system using a computer in a pump control unit.

BACKGROUND OF THE INVENTION

For the control of the fuel injection pump of a Diesel engine, generally speaking, a governor mechanism and an injection timing control mechanism have been employed. Unfortunately the characteristics of their mechanical parts, such as a spring, vary greatly, thereby making it difficult to accomplish high accurate control over a wide driving range. In this regard, the use of a speed limiter has particularly failed to sufficiently satisfy the control requirement.

On the contrary, a method of electronically controlling the operation of the Diesel engine has been proposed to accomplish the control on the basis of complex requirements.

One prior art, proposed for electronically controlling a Diesel engine using an analog type electronic control system, is described in the U. S. Patent No. 3,973,537. In this system, the rate of injection of fuel to the engine, i.e., the axial position of the control rod, is sensed as feedback control factor. However, it does not provide sufficient improvement of exhaust emission control, fuel economy and engine protection.

For a Diesel engine, moreover, a computer control system for controlling injection timing is described in U.S. Patent No. 4,176,624 but no computer is used for measuring the actual injection, timing.

SUMMARY OF THE INVENTION

An object of the present invention is to provide an electronic control system for Diesel engines which can attain optimum control characteristics over the entirety of the driving range.

The present invention is characterized in that there are provided actuators for electrically controlling the injection rate and timing of the fuel injection pump of a Diesel engine and in that a program for obtaining optimum characteristics by considering the Diesel engine and the fuel injection pump as an integral structure is stored in the memory of a micro-computer and is executed on the basis of both the running condition of the engine and the variable condition of the fuel injection pump, so that the fuel injection rate and the injection timing are controlled.

According to the present invention, the injection rate and timing of the fuel injection pump can be adjusted by electronically controlled actuators and the micro-computer having preset arithmetic patterns (or program) calculates and feeds out the controlled variables for the actuators on the basis of the conditions of both the actuators and the engine so that a highly accurate control can be performed over the entire running range of the engine, whereby there can be attained an excellent improvement in fuel economy, output, exhuast emixxion control, and engine protection.

BRIEF DESCRIPTION OF THE DRAWINGS

Figure 1 is a diagramatic block diagram of an electronic control system for a Diesel engine according to one embodiment of the present invention;

Figure 2 shows, in detail, the fuel injection pump, the injection rate adjustor and the injection timing adjustor system of Figure 1.

Figure 3 shows the details of the pump control unit of Figure 1;

Figure 4 is a diagramatic flow chart of the time-divided processing operations involved in the operation of the pump control unit;

Figure 5 is a time chart of the task processing operations;

Figures 6 and 7 are diagramatic flow charts of processing operations for determining the control orders of the operation;

Figure 8 is a charg showing the characteristic of the fuel adjusting position of the fuel injection pump of the present invention;

Figure 9 is a chart showing one example of the injection timing characteristics;

Figure 10 is a schematic diagram which shows the outline of a fuel injection rate control;

Figure 11 is a flow chart of the fuel injection rate control;

Figure 12 is a flow chart of analog input processing operations; and

Figure 13 is a chart showing the flow of the injection timing control.

## DETAILED DESCRIPTION

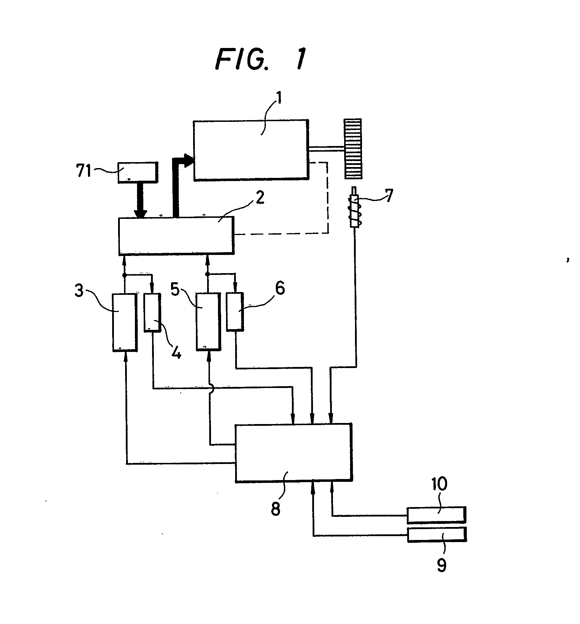

Referring to Figure 1, a fuel injection pump 2 supplies fuel to a Diesel engine 1. A pump control unit 8 determines the output variable to feed fuel from a fuel tank 71 to a fuel injection rate adjustor 3 and an injection timing adjustor 5.

As a supplier of the input of the pump control unit 8, there are provided a fuel injection rate adjustment detector 4, an injection timing detector 6, an engine speed detector 7, a starting switch 9 and an engine speed indicator 10. The pump control unit 8 includes a micro-computer and receives the aforementioned inputs so that it performs arithmetic calculations in accordance with a predetermined control program and feeds out an output.

The signal of the starting switch 9 becomes the run signal of the control program. On the other hand, the engine speed indicator 10 is made operative to generate an electric signal indicating the desired running condition of the engine. The engine speed indicator 10 may be, for example, a potentiometer which cooperates with means for operating the opening of an accelerator. The injection rate and timing of the fuel are controlled in accordance with the difference between the indication of the engine speed indicator 10 and the actual engine speed of the engine, which is detected by the engine speed detector 7.

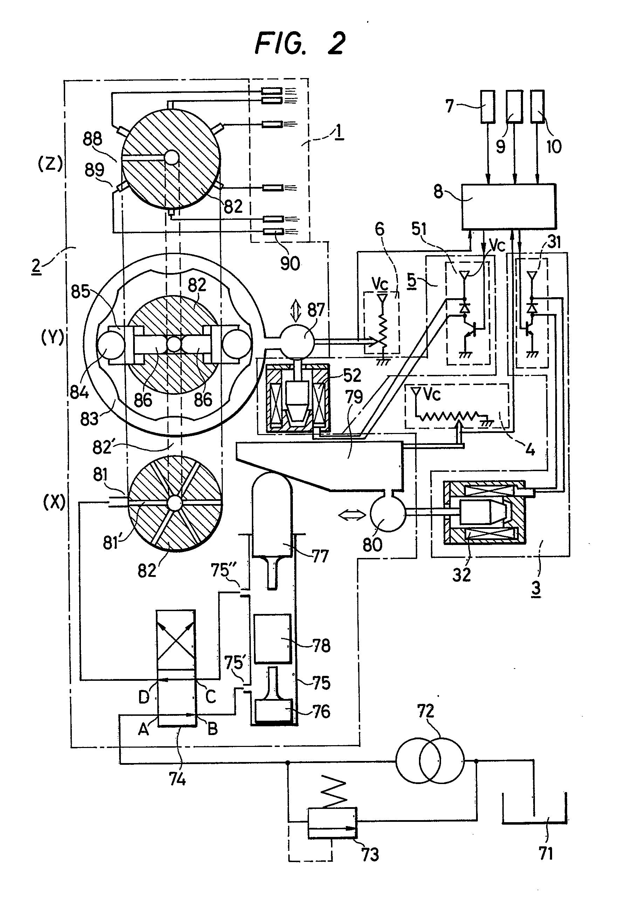

Next, details of the injection pump and its control unit will be described in the following with reference to Figure 2. The fuel injection pump 2 is constructed of a four-way valve 74, a shuttle mechanism 78, a metering cam 79 and a plunger 86.

The fuel in the fuel tank 71 is drawn in and pressuirized by a feed pump 72 and is regulated to have a suitable pressure by a pressure regulating valve 73. This feed pump 72 is driven by the engine 1. The aforementioned pressure-regulated fuel is introduced into the four-way valve 74. The four-way valve 74 has two conditions I and II. In condition I, supply port A and change-over port B are interconnected, and at the same time change-over port C and outlet port D are interconnected. In condition II, supply port A change-over port C, and change-over port B and outlet port D are interconnected respectively. The two change-over ports B and C of four-way valve 74 are connected with the two connecting ports 75' and 75'', respectively, of a shuttle mechanism 75. This shuttle mechanism 75 includes a fixed pin 76, shuttle 78 which reciprocates on response to the pressure of the fuel, and a movable pin 77 having a variable position. The movable pin 77 will be moved upwardly by the pressure of the fuel, but its position is regulated by the metering cam 79. This metering cam 79 includes a cam lever 80 and is controlled by the solenoid 32 of the fuel injection rate adjustor 3.

Outlet port D of four-way valve 74 is connected with an intake port 81 which is formed in a predetermined position of the outer circumference of a to be descriged shaft 82.

When four-way valve 74 is in condition I, as shown, fuel is introduced through supply port A, change-over port B and connecting port 75' into the shuttle mechanism 75 to thereby shift the shuttle 78 towards the movable pin 77. The fuel that has been confined by the shuttle 78 and the movable pin 77 is allowed to flow in the same quantity to that intro duced through the connecting port 75'', the change-over port C and the outlet port D into the inlet port 81. When four-way valve 74 is in condition II, fuel is allowed to flow through the inlet port A, the change-over port C and the connecting port 75'' into the shuttle mechanism 75 so that the same quantity of fuel that flowed thereinto through the shuttle 78 is carried through the connecting port 75', change-over port B and the outlet port D into inlet port 81. It is necessary that all the aforementioned portions be filled up with the fuel. Here, each time the shuttle 78 is rotated once, the quantity of fuel to be fed out to the intake port 81 is determined by the effective area and moving stroke of the shuttle; it is effectively determined only by the moving stroke, because the effective area of the shuttle mechanism is constant. Here, since the moving stroke of the shuttle 78 is controlled by the position of the movable pin 77 which is determined by the metering cam 79, the quantity of fuel fed out for each operation is determined by the metering cam 79. This signal driving the cam 79 is calculated by the control unit 8 and is fed to the solenoid 32 through the output circuit 31 of the fuel injection rate adjustor 3. This signal is a pulse signal, which has a high frequency of about 10 m sec period and which has its on-duty, i.e., the on-time ratio during one period controlled, so that the cam 79 is displaced in proportion to that on-duty.

The embodiment shown is an example in which the present invention is applied to a six-cylinder engine. In the suction section (X) of the fuel pump 2, the shaft 82 rotating in synchronism with the engine crankshaft has its center hole 82' connected with the radial holes corresponding to the engine cylinders such that the center hole 82' faces inlet ports 81, which are formed in the fixed outer circumferential portion, the position of each corresponding to one-sixth rotation of the shaft 82. The facing period is the suction period, during which a quantity of fuel as determined by the aforementioned shaft displacement flows into the center hole 82'. The fuel having flowed thereinto expands the plunger 86 which is arranged in a compression section (Y).

In the compresion section (Y), the shaft 82 is formed with radial holes, in which the plunger 86 is arranged. The plungers, which are formed in an inner cam 83, have the same number as that of the engine

0045029

cylinders, and displace the plunger 86 in the inward direction through a roller 84 and a shoe 85 when the shaft 82 is rotated. At this time, communication between the inlet port 81 and the radial holes 81' in the aforementioned suction section (X) is interrupted, to compress the fuel in the center hole 82' to a high pressure level.

Before this compression is effected, the discharge port 88, which is formed in the shaft 82 in an injection section (Z), is made to have communication with the injection ports 89, which are formed in the outer circumference of the shaft 82 while having the same number as that of the engine cylinders, so that the fuel under the high pressure opens an injection valve 90 and is suppled to the engine cylinder requiring it.

If the communication period between the discharge port 88 and the injection ports 89 in the injection section (Z) is selected to be longer than the period during which the plunger 86 in the compression section (Y) is compressed, the timing, at which the fuel is compressed, i.e., the injection timing can be established for a suitable period required by the engine.

This change of the compression timing can be realized by rotating the inner cam position through an inner cam lever 87, which is mounted on the inner cam 83, and the control is accomplished by the injection timing adjustor 5. This injection timing adjustor 5 includes a solenoid 52, which is connected to the cam lever 87, and an output circuit 51 including a power transistor, and is operated in response to the output signal of the control unit 8 similar to the solenoid 32. The pump control unit 8 including the input and output circuit will be described below.

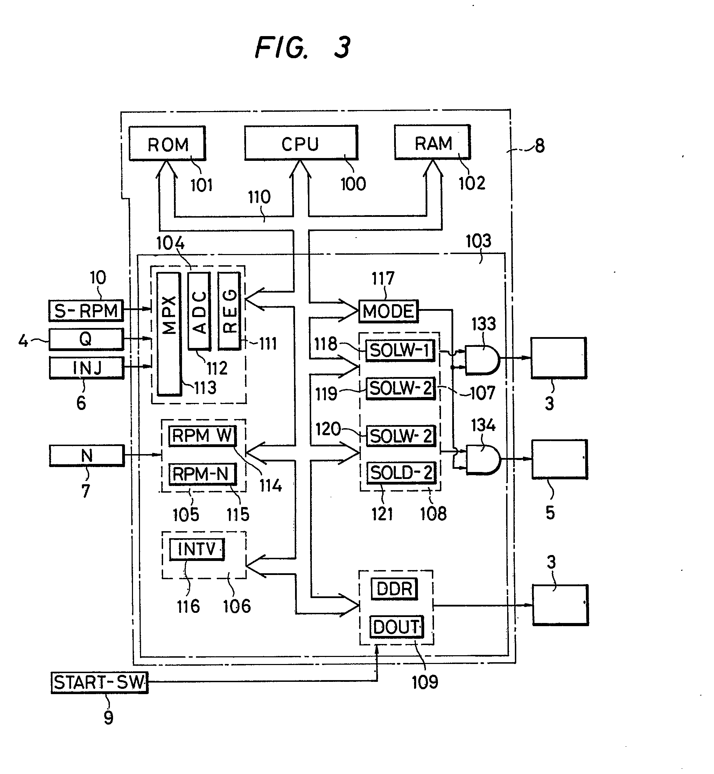

Figure 3 is a block diagram showing the overall contruction of the pump control unit 8, which is constructed of a CPU 100, a read only memory (ROM) 101, a random access memory (RAM) 102, and an input/output circuit 103. The aforementioned CPU 100 operates on input data from the input and output circuit 103 in accordance with various programs, which are stored in the ROM 101, and returns the calculated result again to the input/ output circuit 103. The intermediate memory necessary for those calculations uses the RAM 102. The reception and supply of various data amoung the CPU 100, the RAM 102, and the ROM 101 and input/output circuit 103 are effected through a bus 110 which is composed of a data bus, a control bus and an address bus. The content of the ROM 101 is tabulated in Table 1.

Table 1  Content of ROM

| Address | Content | Address | Content |
|---|---|---|---|
| $C000 $C029 | Subroutine | $C185 | ADIN |
| | None | $C288 | INJCON |
| $C050 | Start Address Clearance of RAM Setting of Constants for Initial Control of Engine | SC300 | HOSEI |
| $C07B | Initial Setting of I/O Unit | $C330 | TSTART |
| $C0C4 | Monitor | $C346 | FCON |
| $C0EB | Polling of IRQ | $C400 $C4C6 | PI Control Subroutine |
| $C012 | Task Dispatcher | | |
| $C173 | Monitor of Timer Flag | | |

The input/output circuit 103 includes, as input means, an analog-to-digital converter (AD) 104 and a discrete input/output circuit (DIO) 109 for receiving and feeding out information of one bit.

In the AD 104, the signal (Q) of the fuel injection rate adjustment detector 4 of the injection pump, the signal (S RPM) of the engine speed indicator 10, and the injection timing signal (INJ) of the injection timing detector 6 are fed to a multiplexer (MPX) 113, and one of the inputs to the MPX 113 is selected and fed to an analog-to-digital converting circuit (ADC) 112. The digitial value or the output of the ADC 112 is held in a register (REG) 111.

The signal (N) of the engine speed detector 7 is fed to a speed measuring circuit (NET) 105. This NET includes an engine speed measuring time setting register (RPMW) 114 and a register (RPM-N) 115 for counting digital signals within the time period set by the RPMW 114 and for holding the count for the time period during which those counted data are renewed.

A pulse output circuit based upon the arithmetic result of the CPU 100 · and the object to be controlled will be described in the following. An injection rate control circuit (SOL-1) 107 and an injection timing control circuit (SOL-2) 108 are circuits for converting a digital value as a result of the arithmetic operation into a pulse output having its duty controlled. In the SOL-1 and SOL-2, there are provided registers (SOLW-1) and (SOLW-2) 118 and 120 for determining the pulse periods, and registers (SOLD-1) and (SOLD-2) 119 and 121 for determining the duties of the pulses. The outputs of the SOL-1 and SOL-2 are fed through AND gates 133 and 134 to the fuel injection adustor 3 and the injection timing adjustor 5. On the other hand, the AND gates 133 and 134 are fed with the output of a registor (MODE) 117 for holding the instructions for controlling various conditions in the input/output circuit 103. By setting the instructions in that MODE 117, the interruption and start of the outputs of the SOL-1 and SOL-2 can be controlled.

On the other hand, the input and output signals of one bit are controlled by the circuit DIO 109. There are prepared a start signal (START-SW) and a monitor signal of the maximum injection variable (MON) as the input and output signals, respectively. Numeral 106 indicates a timer signal device which is made operative to generate a signal at such a time interval as is set in a time setting register (INTV) 116.

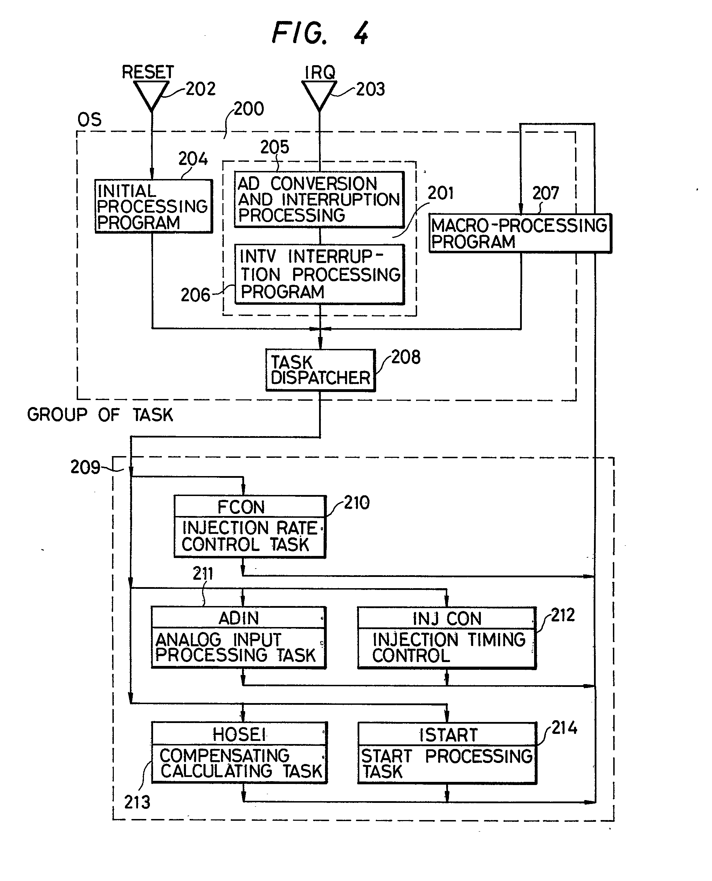

Figure 4 is a block diagram showing the fundamental construction of the program system of the pump control unit of Figure 3. As shown, an initial processing program 204, an interrupt processing program 201, a macro-processing program 207 and a task dispatcher 208 are the management program for managing a group of tasks 209.

The initial processing program 204 is one for operating the micro-computer to thereby effect such an entry processing of the input information as is necessary for clearing the stored content of the RAM 102, for setting the initial values of the registers of the input/output circuit 103 and for controlling the engine, for example.

When an interrupt 203 is generated, the causes for the interrupt are analyzed by an interrupt processing program 201, and the starter demand for starting the necessary task of the task group 209 is fed to the task dispatcher 208. An AD conversion and interrupt processing operation 205 of the interrupt processing program designates the input point for the multiplexer 113 with respect to the AD 104 and simultaneously starts the conversion so that the ADC interrupt is generated after the completion of the conversion. In the interval interrupt processing program 206, on the other hand, the INTV interrupt signal is used as the fundamental signal for monitoring the time of the task which is generated each time interval set in the INTV register 116, e.g., each 10 m sec and which is to be started for a predetermined time period. In response to the present interruption signal, the renewal of the soft timer is performed to start the task which has reached a preset period.

The task numbers indicating the preference orders are assigned to the respective tasks of the task group 209 so that the respective tasks belong to any of the task levels 0 to 2. The task belonging to that at the level 0 includes the injection rate control task 210, and the task belonging to that at the level 1 includes the analog input processing task 211 and the injection timing control (INJCON) 212. On the other hand, the task belonging to that at the level 2 includes compensation calculating task (HOSEI task) 213 and the start preprocessing task (ISTART) 214.

The "HOSEI task" controls the data of maximum injection rate in response to the engine temperature. The "ISTART task" controls the idling speed to change slightly higher when then the engine temperature is low.

The assignments of the aforementioned task levels and the task functions are tabulated in Table 2.

Table 2  Assignment of Task Levels and Functions of Tasks

| Level | Name of Program | No. of Task | Function | Starting Period |
|---|---|---|---|---|
| 1 | OS | | Initial Processing Management of Task Group | Standard 5 m s |
| 0 | FCON | 0 | Control of Fuel Injection rate<br>Control of engine speed | 10 m s |
| 1 | ADIN | 1 | Input Selection of AD Converter | |
| | | | Comparison Filtering | 20 m s |
| | INJCON | 2 | Control of Injection Timing | 30 m s |
| | HOSEI | 3 | Calculation of Compensation Numbers | 40 m s |
| 2 | ISTART | 4 | Monitoring of Start Switch | 40 m s |
| | | | Start & Stop of Soft Timer | |

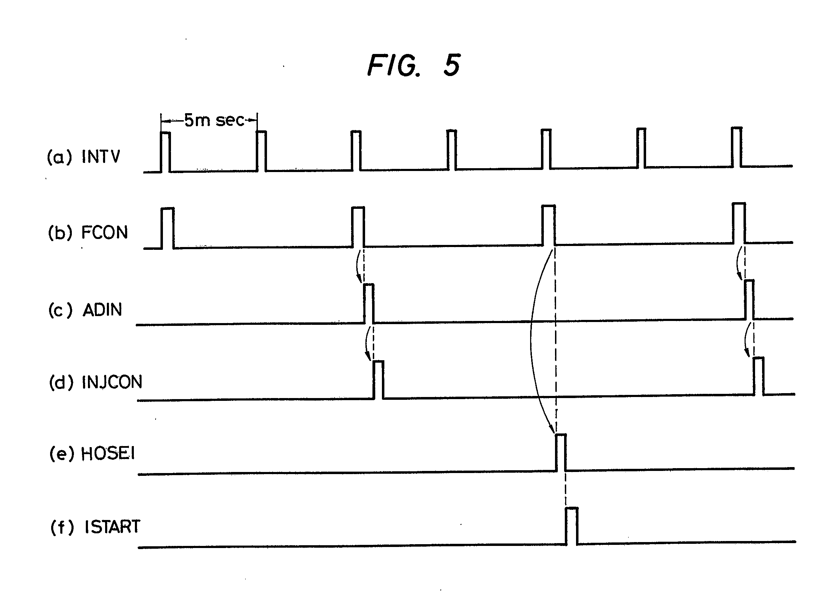

The processing of the task group is performed by the timer interrupt in accordance with the order of the levels, as shown in Figure 5.

The task dispatcher 208 admits the requirements for the starts of the aforementioned various interrupts to thereby assign the occupied time periods of the CPU 100 on the basis of the preference orders imparted to the various tasks corresponding to those requirements for the starts.

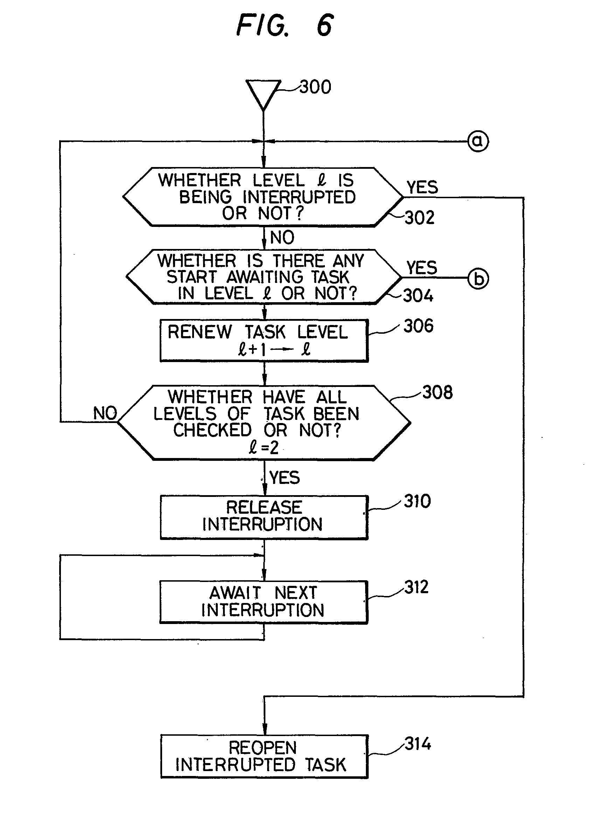

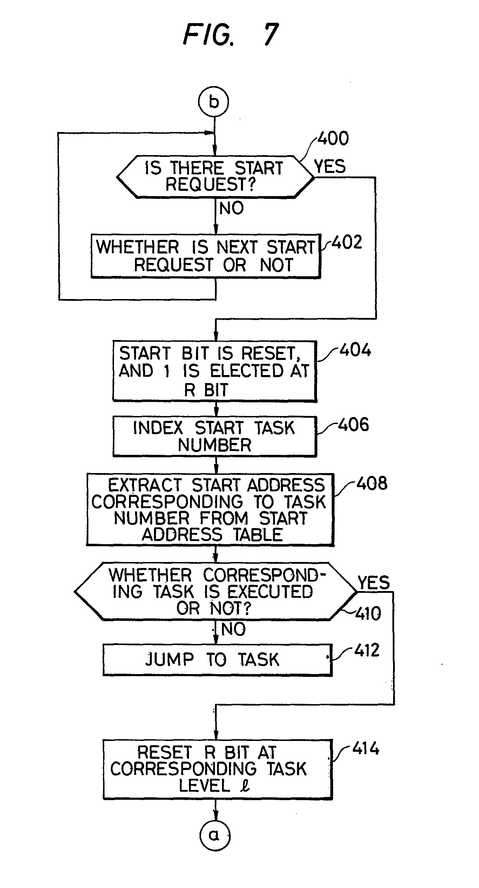

Now, Figures 6 and 7 show processing operation flow charts of the task dispatcher. In Figure 6, if the processing operation of the dispatcher is started at 300, it is determined whether or not the task belonging to the task level $\ell$ is being interrupted at a step 302. More specifically, if a flag 1 is set at the execution bit, the condition is that in which the report of the task completion has not been given to the task dispatcher 208 from the macro-processing program 207, while indicating that the task being executed is interrupted, with the result that an interrup at a higher preference level takes place. As a result, if the flag 1 is set at the execution the program jumps to a step 314 to resume the interrupted task.

On the other hand, if the flag 1 has not been set at the execution bit, i.e., in case the execution-indicating flag is reset, the program is shifted to a step 304 to thereby determine whether or not there is any start-awaiting task at level $\ell$ . In other words, the start bit at the level $\ell$ is located in the order of the execution preference of the task corresponding thereto. Where the flag 1 has not been set at the start bit belonging to the task level $\ell$, the program is shifted to a step 306 to thereby renew the task level. In other words, the task level $\ell$ is subjected to an increment of + 1 so that it becomes $\ell + 1$. If the renewal of the task level is performed at the step 306, the step is shifted to a step 308 to thereby determine whether or not all the levels of the task have been checked. Where all the levels are not checked, i.e., in case the level $\ell$ is not 2, the step is returned to the step 302 so that the processing is performed in a similar manner in the aforementioned order. Where all the task levels are checked at the step 308, the program is shifted to a step 310 to thereby release the interrupt. More specifically, since an interrupt is prohibited during the processing period from the step 302 to the step 308, the interrupt release is effected at that step. The next interrupt is awaited at a subsequent step 312.

Next, if the start awaitying task exists at the task level $\ell$ at the aforementioned step 304, i.e., where the flag 1 has been set at the start bit belonging to the task level $\ell$, the program is shifted to a step 400. The location is made in the order at a high preference execution order corresponding to which start bit of the task level $\ell$ the flag 1 is set by the loop of the steps 400 and 402. When the start bit corresponding thereto is indexed, the program is shifted to a step 404, at which the start bit having the flag set is reset, and the flag 1 is set at the execution bit (R bit) at the corresponding task level $\ell$. At a step 406, moreover, the start task number is indexed, and the start address information of the corresponding start task is extracted at a step 408 by the start address table provided at the RAM 102.

Next, at a step 410, it is determined whether or not the corresponding start task is to be executed. Here, if the start address information extracted takes a predetermined value, e.g., 0, it is determined that the task under consideration need not be executed. This determining step is required to selectively afford the function of a predetermined task of the aforementioned task group for controlling the engine in accordance with the type of automobile. Where it is determined at the step 410 that the execution of the corresponding task is interrupted, the step is shifted to a step 414 so that the R bit at the corresponding task level $\ell$ is reset. Moreover, the step is returned to the step 302 to thereby determine whether or not the task level $\ell$ is being interrupted. Since the flags may stand at a plurality of start bits in the same task level $\ell$, the step is shifted to the step 302 after the R bit has been reset at the step 414.

On the other hand, where execution of the corresponding task is not interrupted at the step 410, i.e., where the corresponding task is executed the program is shifted to a step 412 to thereby effect the jump to the corresponding task so that the task is executed.

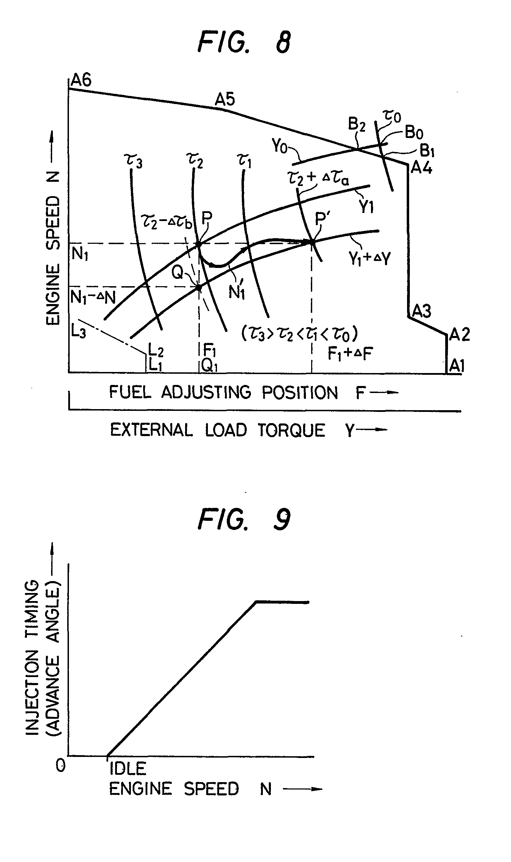

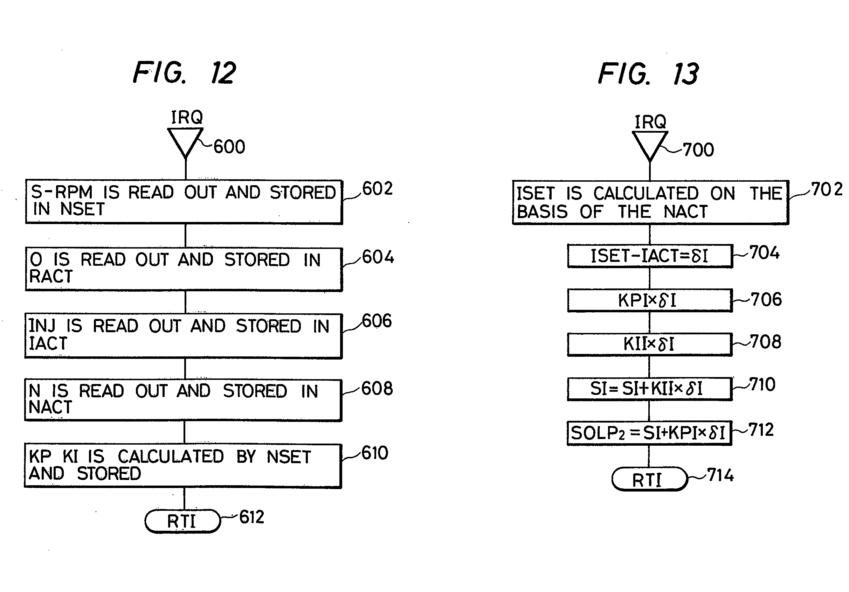

The fuel indiction rate control and the injection timing control according to the present invention will be described in the following with reference to Figures 8 and 13. The control program is performed at a predetermined interval by the interruption of the timer start.

The injection rate of the fuel, i.e., the fuel adjusting position F of the fuel injection pump is controlled in the manner shown in Figure 8.

First of all, a maximum injection limit functioning as the speed limiter will be described. The maximum injection limiters $A_1$ to $A_6$ are determined by the engine speed N and the fuel adjusting position F. On the other hand, the engine speed N is controlled by the engine speed indicator whereas the fuel adjusting position F is determined by the balanced position between an external load torque Y and the torque generated by the engine. The drive at a point B appearing in Figure 8 is outside of the limiter range. In this case, the engine speed and the injection rate have to be forcibly confined to the point $B_1$ within the limiters $A_1$ to $A_6$ so as to protect the engine. Then, if the external load torque Y decreased slightly the driving point of the engine will be more to the point $B_2$ along the line $A_1$ to $A_6$.

The controls within the limiters $A_1$ to $A_6$ are performed in the following manner. For example, consider the case in which external load torque characteristics $Y_1$ are increased by $\Delta Y$ from the stable point P of an engine speed $N_1$, an engine torque $T_2$ and a fuel adjusting position $F_1$. If the fuel adjusting position is constant at $F_1$, the output torque T of the engine is decreased by $T_2 - T_6$ so that an equilibrium prevails at an intersection point Q with $Y_1 + \Delta Y$.

Unless the engine speed indicator 10 is operated, the arithmetic processing inside of the pump control unit 8 is so controlled to fall at a point P', i.e., so that the engine speed may be hdel constant. This results in that the fuel adjusting position F is so controlled to $F_1 + \Delta F_1$ so as to rasie the engine torque T. This processing is not performed after the engine condition is changed to the point Q but is realized by presetting the proportionality and integration constants in conformity with the characteristics of the engine and the fuel injection pump. As a result, the engine speed $N_1'$ is varied, as indicated at arrow, and is held at $N_1$.

In the governor mechanism, incidentally, control is normally impossible in the low speed range of the engine, i.e., at the lefthand side of $L_1$ to $L_3$ of Figure 8, but this impossible range is reduced in the case of the electronic control of the present invention.

Next, the injection timing is determined, as shown in Figure 9, such that the injection timing i.e., the advance angle corresponds to the actual engine speed N in a one-to-one relationship. These characteristics are determined for the engines having the same characteristics by obtaining the injection timing at which the maximum output can be generated without any knocking.

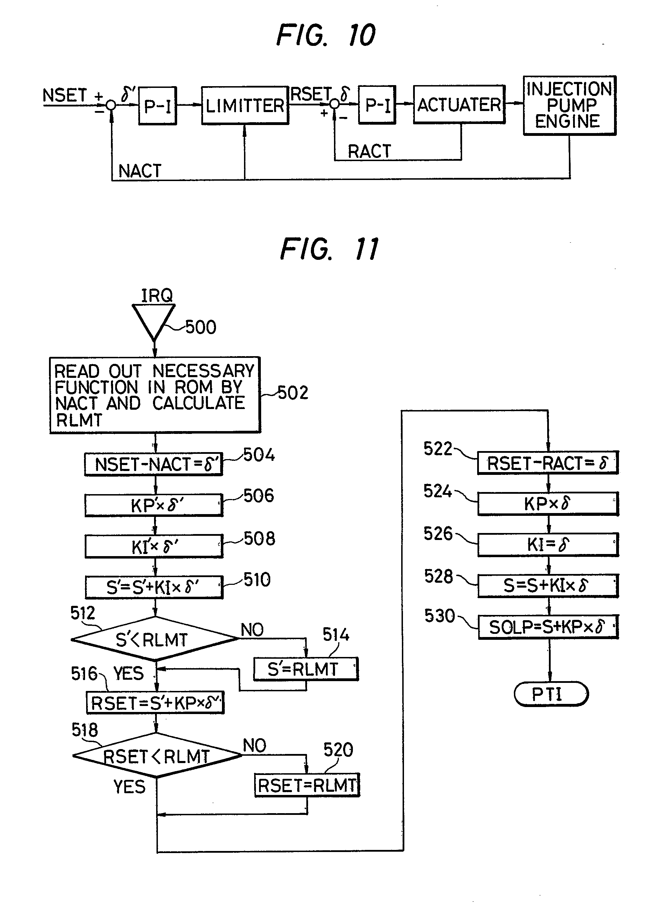

Figure 10 is a schematic diagram which shows an outline of a fuel injection rate control (FCON). The actual engine speed (NACT) is compared with the engine speed indication (NSET). The difference $\delta$ between NACT and NSET becomes an input of the P-I (Proportional Integrating position) control. The set value of fuel adjusting position (RSET) is calculated from the output of the P-I control and then set. The limit of the fuel adjusting position (RLMT) is calculated on the basis of the NACT. The RSET is confined with the RLMT.

The actual value of fuel adjusting position (RACT) is compared with the set value of fuel adjusting position (RSET). As a result , the P-I control is controlled to minimize the difference $\delta$ between the RACT and the RSET. For example, when the NACT is lower than NSET, $\delta$ becomes larger than zero. Therefore, RSET increases within the RLMT and the

0045029

RACT is controlled to approach RSET. As a result, the RACT increases and the NACT approaches the NSET.

If a maximum load is placed on the engine, the RSET is replaced with the RLMT. Th8s prevents RSET from exceeding the maximum injection limiters. Consequently, the engine speed becomes stable, existing, at some difference between NACT and NSET for a maximum load condition. This is very important for improving the exhaust emission and the engine protection.

Figure 11 shows a flow chart of (FCON). The fuel injection rate control, i.e., the fuel adjusting position is basically performed in accordance with the numerical data of the NSET. First of all, at a step 502, NACT is read out, so that the limit RLMT of the fuel adjusting position by the NACT is calculated from the limiter (RLMT function) of the maximum injection on the basis of the date (i.e., the engine speed and the fuel adjustment limit position of the A1 to A5 in Figure 8 which are stored in advance in the ROM 101. Next, at a step 504, an RPM error ' is determined so that a proportion value P' multipled by the proportional constant KP' and the integration value I' multiplied by the integration constant KI' are calculated at subsequent steps 506 and 508 respectively. Next, at a step 510, the integrated result is added to the held value S', i.e., the integrated result to thereby effect the renewal. S' is confined with the RLMT; namely, at a step 512, a determination is made as to whether S' is smaller thant the RLMT. If the answer is no, the RLMT is set as S' at step 514. RSET is calculated at step 516 then a determination is made as to whether RSET is smaller than RLMT at step 518. If RSET is not smaller than RLMT, RSET is set as RLMT at step 520. At step 522, RACT is compared with RSET; than at steps 524, 526 the proportion value multipled by the proportionality constant (KP) and the integration multiplied by the integration constant (KI) are calculated. At step 528, the integrated result is added to the held value S to thereby effect the renewal.

0045029

At a step 530, an output value (S + KP x $\delta$) is stored in the register SOLP-1 for determing the duty variable of the signal for controlling the injection rate adjustor 3.

Incidentally, the names of the variables and addresses used in the flow chart and their contents will be tabulated in Table 3.

Table 3

| Names of Variables and Addresses | Content |
| --- | --- |
| NSET | Set Value of Engine speed |
| NACT | Actual Value of Engine speed |
| RLMT | Limit Value of Fuel adjusting Position |
| RACT | Actual Value of Fuel Adjusting Position |
| RSET | Set Value of Fuel Adjusting Position |
| ISET | Set Value of Fuel Injection Timing |
| IACT | Actual Value of Fuel Injection Timing |
| $\delta$ ' | Error |
| $\delta$ | ditto |
| R | ditto |
| KP | Proportion Constant |
| KPP | ditto |
| KPI | ditto |
| KI | Integration Constant |
| KIP | ditto |
| KII | ditto |
| S' | Integrated Held Value |
| S | ditto |
| SI | ditto |
| SOL 1 | Output |
| SOL 2 | ditto |

Next, Figure 12 shows a flow chart of the analog input processing (ADIN). As the input, there are the engine speed S-RPM (Step 602) the fuel adjusting position Q (Step 604), the injection timing INJ (Step 606) and the actual speed N of the engine (Step 608). At a step 610, on the other hand, the proportionality constants KP and KI based upon the characteristics of the engine system are determined by the engine speed indicating value. The values obtained in the respective steps are successively stored in the RAM 102.

Figure 13 shows a flow chart in the injection timing control (INJCON). First of all, at a step 702, the injection timing ISET is determined on the basis of the NACT. For this determination, the function having the characteristic values shown in Figure 9 are stored in the ROM 101 and used for the calculations. The processing operations subsequent to a step 704 are similar to those the fuel adjustment control, which has been described with reference to Figure 11, although the proportionality and integration constants are different.

Incidentally, the knock sensor may be attached to the engine so that the injection may be performed while advancing the injection timing to a limit knocking. In this case, it is sufficient that the advance angle be deviated with a preset width about the characteristics of Figure 9 in accordance with the presence of the knocking.

While we have shown and described several embodiments in accordance with the present invention, it is understood that the same is not limited thereto but is susceptible of numerous changes and modifications as known to one having ordinary skill in the art and we therefore do not wish to be limited to the details shown and described herein, but intend to cover all such modifications as are encompassed by the scope of the appended claims.

0045029

- 1 -

We claim:

1. A processor-controlled apparatus for controlling the supply of fuel to a Diesel engine having a fuel injection pump for supplying fuel to the engine and a pump control unit for controlling the operation of said fuel injection pump in response to signals representative of operating conditions of the engine, said apparatus including:

a fuel injection rate adjustor (3) and an injection timing adjustor (5) controlled in accordance with the rotations of the engine crankshaft; and wherein said pump control unit (8) includes means (7, 9, 10) for detecting the operational state of the engine; and means (4, 6) for detecting the respective operational conditions of said fuel injection rate adjustor (3) and said injection timing adjustor (5); and wherein the processor through the operation of which the apparatus is controlled includes memory means (101, 102) storing data for operating said fuel injection rate adjustor (3) and said injection timing adjustor (5) in accordance with the difference between the desired operational state of the engine and the actual operational state of the engine, and arithmetic means (100) for successively generating said operating data on the basis of previously stored data and data.representative of the current operational state of the engine.

2.   A processor-controlled apparatus according to claim 1, wherein said data is representative of maximum fuel injection generated in accordance with the speed of rotation of the engine crankshaft.

3.   A processor-controlled apparatus according to claim 1, wherein said data is representative of the sum of a first data component which is proportional to the difference between the desired operational state of the engine and the actual operational state of the engine and a second data component representative of the integral of said difference.

4.   A processor-controlled apparatus according to claim 1, wherein said fuel injection pump (2) includes a shuttle mechanism (75) for metering the quantity of fuel to be injected, a cam lever (80) for regulating the displacement of said shuttle (78), a plunger (86) for pressurizing the metered fuel, an inner cam (87) for regulating the timing at which the plunger (86) shifts to its compression stroke, and a distributor mechanism for the pressurized fuel.

5.   A processor-controlled apparatus according to claim 4, wherein said fuel injection rate adjustor (3) includes a first solenoid (32) for driving said cam lever (80), said injection timing adjustor (5) includes a second solenoid (52) for driving said inner cam (87), and wherein said pump control unit (8) includes means for generating first and second pulse signals, the duty ratios of which are processor-controlled, for operating said first and second solenoids (32, 52), respectively.

1/10

FIG. 1

2110

# FIG. 2

0045029

3 / 10

*FIG. 3*

*FIG. 3*

4/10

## FIG. 4

FIG. 5

(a) INTV

←5m sec→

(b) FCON

(c) ADIN

(d) INJCON

(e) HOSEI

(f) ISTART

5/10

0045029

6/10

## FIG. 6

- 300

ⓐ

WHETHER LEVEL $\ell$ IS
BEING INTERRUPTED
OR NOT? — 302   **YES**

↓ NO

WHETHER IS THERE ANY
START AWAITING TASK
IN LEVEL $\ell$ OR NOT? — 304   **YES** ⓑ

RENEW TASK LEVEL
$\ell+1 \longrightarrow \ell$ — 306

WHETHER HAVE ALL
LEVELS OF TASK BEEN
CHECKED OR NOT?
$\ell = 2$ — 308

NO   ↓ YES

RELEASE
INTERRUPTION — 310

AWAIT NEXT
INTERRUPTION — 312

REOPEN
INTERRUPTED TASK — 314

7/10

## FIG. 7

```
                    ( b )
                     │
  ┌──────────────────┤
  │         ┌────────▼────────┐
  │        ╱   IS THERE START   ╲  YES
  │        ╲     REQUEST?       ╱────────┐  400
  │         └────────┬────────┘          │
  │                  │ NO                │
  │         ┌────────▼────────┐          │
  │         │ WHETHER IS NEXT START │ 402│
  │         │   REQUEST OR NOT   │       │
  │         └────────┬────────┘          │
  └──────────────────┘                   │
                     ┌───────────────────┘
            ┌────────▼────────┐
            │ START BIT IS RESET,│ 404
            │ AND 1 IS ELECTED AT│
            │       R BIT        │
            └────────┬────────┘
            ┌────────▼────────┐
            │ INDEX START TASK │ 406
            │     NUMBER       │
            └────────┬────────┘
            ┌────────▼────────┐
            │ EXTRACT START ADDRESS │ 408
            │ CORRESPONDING TO TASK │
            │  NUMBER FROM START    │
            │    ADDRESS TABLE      │
            └────────┬────────┘
           ╱────────▼────────╲  YES
           ╲ WHETHER CORRESPOND-╱────┐
           ╱ ING TASK IS EXECUTED    │
           ╲     OR NOT?       ╱ 410 │
            └────────┬────────┘      │
                     │ NO            │
            ┌────────▼────────┐      │
            │   JUMP TO TASK  │ 412  │
            └────────┬────────┘      │
                     │               │
                     └───────┬───────┘
            ┌────────────────▼────┐
            │   RESET R BIT AT    │ 414
            │ CORRESPONDING TASK  │
            │     LEVEL ℓ         │
            └────────┬────────────┘
                     │
                    ( a )
```

## FIG. 8

FUEL ADJUSTING POSITION F →

EXTERNAL LOAD TORQUE Y →

## FIG. 9

9/10

## FIG. 10

## FIG. 11

# FIG. 12

IRQ

▽ ~600

| S-RPM IS READ OUT AND STORED IN NSET | ~602 |
| O IS READ OUT AND STORED IN RACT | ~604 |
| INJ IS READ OUT AND STORED IN IACT | ~606 |
| N IS READ OUT AND STORED IN NACT | ~608 |
| KP KI IS CALCULATED BY NSET AND STORED | ~610 |

( RTI ) ~612

# FIG. 13

IRQ

▽ ~700

| ISET IS CALCULATED ON THE BASIS OF THE NACT | ~702 |

$ISET-IACT=\delta I$ ~704

$KPI \times \delta I$ ~706

$KII \times \delta I$ ~708

$SI = SI + KII \times \delta I$ ~710

$SOLP_2 = SI + KPI \times \delta I$ ~712

( RTI ) ~714

10/10

0045029